Europäisches Patentamt

European Patent Office

Office européen des brevets

(11) Publication number: **0 182 647**
A2

# EUROPEAN PATENT APPLICATION

(21) Application number: **85308391.3**

(22) Date of filing: **18.11.85**

(51) Int. Cl.⁴: **G 01 N 21/47**, G 01 J 1/16

(30) Priority: **19.11.84 GB 8429211**

(43) Date of publication of application: **28.05.86**
Bulletin 86/22

(84) Designated Contracting States: **DE FR SE**

(71) Applicant: **HOME DIAGNOSTICS, INC., 6 Industrial Way West, Eatontown New Jersey 07724 (US)**

(72) Inventor: **Salem, Robert Joseph, 109 Glover Avenue, Norwalk CT 06850 (US)**

(74) Representative: **Warren, Keith Stanley et al, BARON & WARREN 18 South End Kensington, London W8 5BU (GB)**

(54) **Reflectometer.**

(57) A reflectometer has an optical chamber comprising a light source (Q1) for illuminating a test specimen (9) and a relfectance photosensor (Q3) responsive to light reflected from the test specimen to produce a reflectance signal corresponding to the reflectance of the specimen. The reflectance photosensor (Q3) is disposed along an optical path (5) having its optical axis (12) inclined to the optical axis (11) of the optical path (4) along which light is projected onto the test specimen by the light source (Q1) so that the photosensor (Q3) detects random reflections from the test specimen (9). The optical chamber may also include a reference photosensor (Q2), a beam splitter (15) arranged to reflect a minor fraction of the light emitted by the light source (Q1) onto the reference photosensor, and a drive circuit for the light source which is responsive to a control signal derived from the reference sensor (Q2) and which provides for pulsed operation of the light source so as to maintain the control signal generally at a constant level.

REFLECTOMETER

The present invention relates to reflectometers and, more particularly, although not exclusively, to reflectometers used to monitor the colour change of a test strip in response to its reaction with a fluid specimen applied to the strip. For example, such reflectometers may be used to monitor the blood/glucose levels of diabetics by detecting the colour change of a test strip to which a blood specimen has been applied. Reflectometers used for this purpose are commonly referred to as "glucometers".

Ideally, a reflectometer as used, for example, to measure blood/glucose levels from reactive test strips, should give consistent reflectance measurements from standard reflectors regardless of temperature, humidity, or other environmental factors. It should also produce a consistent measurement for a given colour standard, regardless of a test strip's surface shine. Particularly, with dark colours, which absorb more light, the shine effect produced by directly reflected light does not allow accurate sensing of such colours.

Temperature effects on circuits and optical sensors have proved to be the single largest cause of reflectance errors and the most difficult of environmental variables to overcome. Hitherto, relatively low cost reflectometers have endeavoured to eliminate the temperature effects by having a user calibrate each time with a dark and light standard reflector or, at a minimum, with a light standard reflector allowing the dark standard to drift. It has

0182647

been found that using dark standards contributes very little to overall accuracy. Since many users reject the necessity of reflectance calibration every time before use, many manufacturers have avoided this requirement by assuming that most measurements would be made at about 25°C ambient. With this arrangement, users are only required to check reflectance calibration periodically. However, a check on the performance of reflectometers presently marketed and having no reference systems, at temperatures of 15°C to 35°C, shows that such units are subject to errors ranging from 50% to 100%.

In order for a reflectometer to provide accurate readings, it is merely necessary for the reflectometer to detect the colour of a specimen or sample and not the reflected image so that it is unnecessary to detect directly reflected light, and shine effects can be alleviated by detecting random or dispersed reflected light. Accordingly, it is one object of the present invention to provide a reflectometer which detects random reflections from a test strip or other specimen, thereby alleviating errors produced by the shine effect of directly reflected light.

From one aspect, therefore, the invention provides an optical chamber for a reflectometer, comprising at least one light source arranged to direct light, along an associated first optical path to illuminate a test specimen, and at least one reflectance photosensor disposed along an associated second optical path having its optical axis inclined to the optical axis of the first optical path and intersecting the latter at or adjacent the test specimen, whereby the photosensor detects random reflections from the test specimen. The optical axis of the second optical path may be inclined at an angle of at least 20° to the optical axis of the first path and is, preferably, inclined at an angle of approximately 35°.

With this invention, the reflectance sensor is offset from the optical axis of the first optical path, along which the light beam from the light source is projected onto the test specimen, so that whilst the overall amount of light received for a given reflectance is reduced, it is positioned out of the shine or halo area and the problem of surface shine, which may change true reflectance readings, especially of dark values, by as much as 2%, is reduced or eliminated. By alleviating shine effects, the reflectance measurement of high absorbing colours is improved and, in the case of glucometers, for example, the measurement of higher glucose concentrations, say in excess of 400 mg/dl, is more accurate.

The optical chamber may also include a reference photosensor associated with the or each light source and disposed along a third optical path, and means arranged to reflect a minor portion of the light projected by the associated light source along this third optical path and onto the reference sensor whilst transmitting a major portion of the light so as to impinge on the test specimen.

Conveniently, the or each light source is a light emitting diode (LED) and the sensors are photodiodes.

In one preferred embodiment of the invention designed for a glucometer, the reference sensor is disposed along a third optical path which has its axis substantially perpendicular to the axis of the first optical path and a beam splitter is arranged to reflect a minor portion of the light emitted by the associated light source onto the reference sensor. A holder device is provided for locating a test strip along the first optical path with the plane of the strip disposed substantially perpendicular to the first optical axis, and a protective lens device is disposed across the first and second optical paths adjacent the position at which the test strip is located.

When LEDs and other light sources are initially excited with a constant current, the emitted light is a function of the temperature of the source. Light sources are generally more efficient when cold and the amount of light emitted decreases, as they warm up, until a steady state emission is reached. For example, as the junction of an LED heats up, less light is emitted for the same constant current. The same effect also holds true for ambient temperature. As ambient temperature increases, the efficiency of an LED or other light source decreases. Hence, less light is emitted for a given current as junction or operating temperature or ambient temperature increases.

Most glucometers solve the temperature problems of LEDs or other light sources by switching them on for a relatively long period, say, 30 to 60 seconds, before a measurement is made, thereby allowing them thermally to equilibriate. This requirement obviously causes the glucometers to consume unnecessary battery power for each measurement and thus battery life is reduced.

Accordingly, it is another object of the present invention to avoid the requirement for switching on the light source of a reflectometer for a long period before a measurement can be taken. Other objects are to alleviate errors caused by environmental conditions and eliminate the need to calibrate for reflectance.

From another aspect, therefore, the invention provides a reflectometer comprising at least one light source arranged to illuminate a test specimen, at least one reflectance sensor responsive to light reflected from a test specimen to produce a reflectance signal corresponding to the reflectance of the specimen, at least one reference sensor responsive to a fraction of the light emitted by the light source, and a drive circuit for the or each light source which is responsive to a control signal derived from the associated reference sensor and which operates the light source so as to maintain the control signal generally at a constant level.

Conveniently, the drive circuit for the light source comprises comparator means which compares the control signal derived from the reference sensor with a reference signal and operates the light source so as to maintain the control signal generally at a constant level, for example, the level of the reference signal.

Hence, with this invention, instead of applying a constant current to a light source, the light source may be forced to output the same voltage level regardless of ambient temperature or the temperature of the light source. This is achieved by successively switching the light source on and off to produce pulsed operation with a frequency and pulse width sufficient to keep the signals derived from the reference sensor at or in the region of a predetermined constant level independently of temperature, light source efficiency or reference sensor sensitivity. Consequently, the light source need only be switched on for a short period, for example, 1-2 seconds, to permit the reflectometer to produce a measurement of reflectance.

Preferably, the reflectometer includes means for producing a digital reflectance signal corresponding to a reflectance sensor output. Such means may include an analog-to-digital (A/D) converter circuit which compares an analog reflectance signal derived from the reflectance sensor output with the aforementioned reference signal and produces a pulse train having a pulse rate or frequency corresponding to the analog reflectance signal. This resulting pulse or digital signal may readily be processed by a central processing unit, such as a microprocessor, to produce a measurement of the reflectance.

The or each reference sensor may be connected to amplifying means having an integrating circuit for integrating the output of the amplifier, and the control signal for the light source drive circuit may be derived from this amplifier output signal. Similarly, the or each reflectance sensor may be connected to amplifying means having an integrating circuit coupled to its output, and the reflectance amplifier output signal may be processed to produce the digital reflectance signal.

The output of the reference sensor amplifier may be connected to a voltage divider circuit for supplying an adjustable control signal to the light source drive circuit. The output of the reflectance sensor amplifier may be supplied to the A/D converter network via a fixed gain amplifier having one input connected to the reflectance amplifier output and another input connected to the voltage divider circuit associated with the reference sensor amplifier. The connection of the drive circuit to the voltage divider may be adjustable so as to set the light standard reflectance whilst the connection of the fixed gain amplifier to the divider may be used to adjust the dark standard reference.

In order that the present invention may be more readily understood, reference will now be made to the accompanying drawings, in which:-

Figure 1 illustrates the optical chamber and associated test strip holder of a glucometer embodying the invention, the optical chamber being shown in section taken along the line I-I of Figure 3,

Figures 2 and 3 are, respectively, end and side elevations of the optical chamber illustrated in Figure 1, with the test strip holder removed,

Figure 4 illustrates the electronic circuitry of the glucometer,

Figures 5 to 10 illustrate the waveforms of the signals appearing at various terminals of the light source drive circuit and A/D circuit,

Figure 11 is a block circuit diagram of the data logger incorporated in the glucometer circuitry, and

Figures 12 and 13 respectively illustrate a plan view and a half section of a modified form of optical chamber.

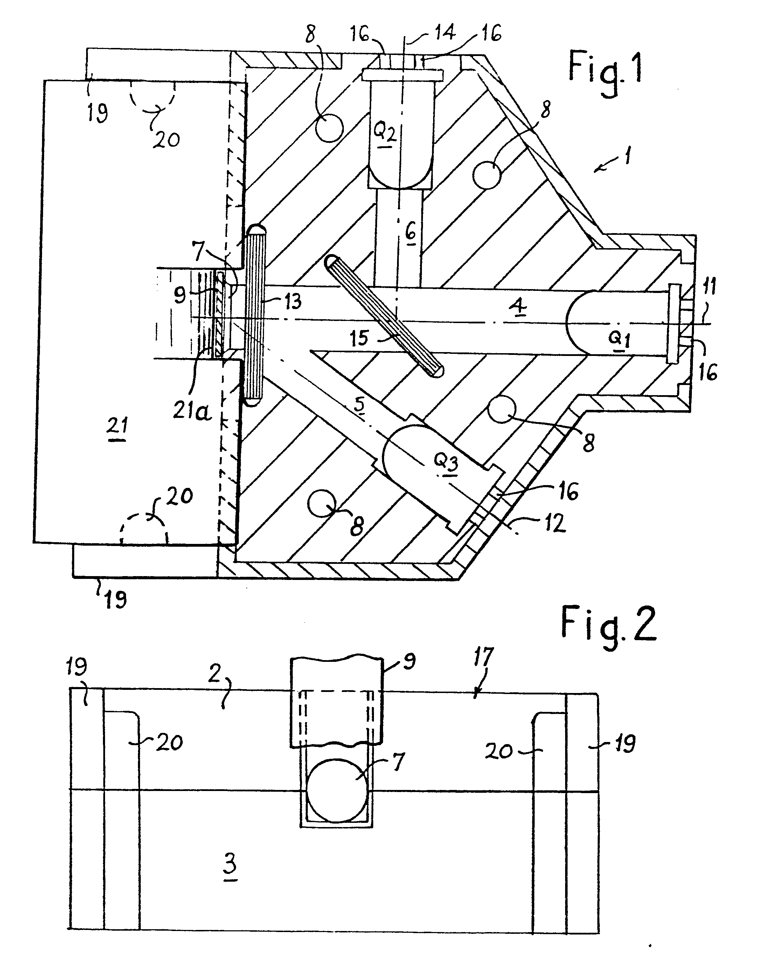

Referring to Figures 1, 2 and 3 of the drawings, the optical chamber of the glucometer comprises a body 1 formed from two parts 2,3 joined together by screws (not shown) engaging in holes 8 in the two parts. The body is preferably made of aluminium, the external surfaces of which have a dull-black anodised finish. Formed within the body are three passageways 4,5 and 6 constituting optical paths or guides. The first optical guide 4 is open at one end 7 and at its opposite end mounts a light source in the form of an LED Q1. The latter is arranged to project light along the first guide onto a test strip 9 positioned at the open end of the guide by means of a test strip holder 21. The second guide 5 intersects the first guide adjacent the open end 7 of the latter and has a photodiode sensor Q3 for sensing reflectance mounted at its end remote from the first guide. The optical axis 12 of the second guide intersects the axis 11 of the first guide at the plane of the open end of the latter and is inclined at an angle of 35° with respect of the first optical axis 11. A protective lens 13, for example, made from glass, is suitably located across the first and second optical guides adjacent the open end 7 of the first guide. The third optical guide 6 has its optical axis 14 disposed at right angles to the axis 11 of the first guide and intersects the latter at an intermediate position. A beam splitting lens 15, which may be formed from plastics material, is disposed in an inclined position across the first optical guide 4 with its surface adjacent the LED Q1 located on the point of intersection of the axes 11,14 of the first and third guides. The lens. 15 reflects a fraction of the light projected along the first guide by the LED Q1, into the third optical guide 6 and onto a photodiode reference sensor Q2 mounted in the third guide, at its end remote from the first guide. The LED and photodiodes Q1,Q2,Q3 are connected in the glucometer circuit by leads extending through holes 16 in the body 1 behind these components.

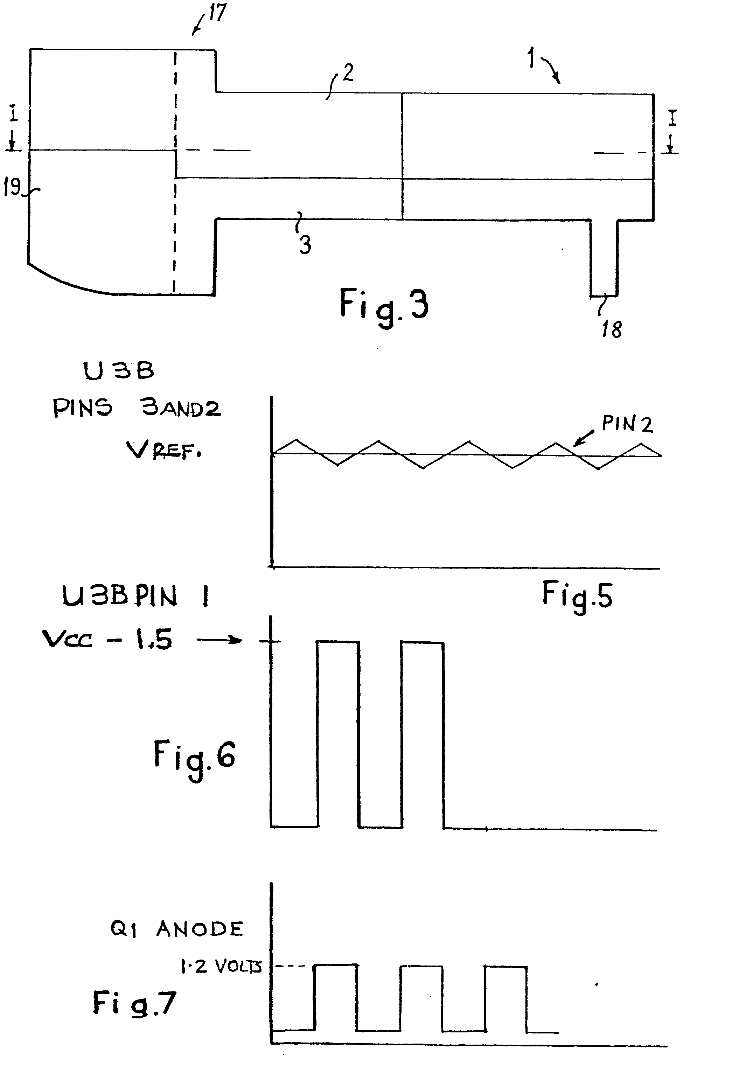

The body 1 has a head 17 at its end adjacent the open end 7 of the first optical guide 4 and a supporting leg 18 at its opposite end and, in use, it is stood on a suitable surface in the position shown in Figure 3. At its head end, the body has spaced opposed guide walls 19 having vertical guide ribs 20 on their inner surfaces. The holder 21 for supporting a test strip 9 in position at the open end 7 of the first optical guide 4 is in the form of a plug and is attached to the body by sliding it in between the guide walls 19, in engagement with the guide ribs 20. The holder is arranged to locate a test strip, which is slid into a slot 21a between the holder and optical chamber, across the open end of the first optical guide and press it into contact with the latter.

The LED Q1 is preferably an infra-red LED emitting light in the region of 940 nm wavelength. The light emitted by Q1 travels down the first optical guide 4 and strikes the lens 15 which may, for example, be a .040 inch (approx. 10 mm) thick acrylic sheet. This lens is arranged to transmit 96% of the light projected by Q1 and to reflect 4% of this light onto the photodiode Q2. The optical guides 4,5,6 may be blackened with infra-red absorbing paint to eliminate most light coming at an angle of 10° or more thereby to force most of the incident light impinging on a test strip 9 to be as close as possible to 90°. Some light incident on the test strip is absorbed relative to colour and the remainder is reflected back into the optical guide 4 at various angles, depending on the surface of the strip and the pressure applied to the back of the strip by the strip holder 21. Most of the light is reflected back at an angle of 14° or less and is highly subject to the shine of the strip surface. However, the photodiode reflectance sensor Q3 is offset from the optical axis of the first guide 4 by 35° so that is is positioned out of the shine or halo area. By eliminating these shine effects, measurement of high absorbing colours is improved and glucose measurement in excess of 400 mg/dl is more accurate.

Since the light incident on photodiode reference sensor Q2 is independent of the colour of a test strip and is only a function of the incident light emitted by the LED Q1, it is used as a reflectance standard, as will hereinafter be more fully described, to give an output voltage corresponding to 100% reflectance.

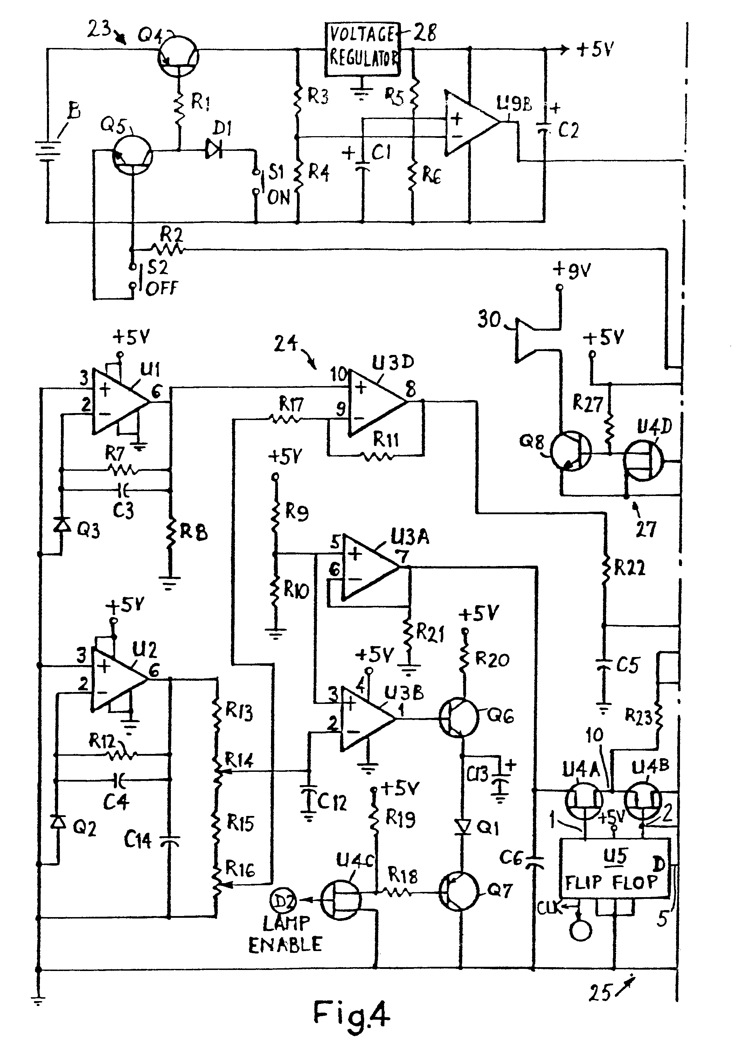

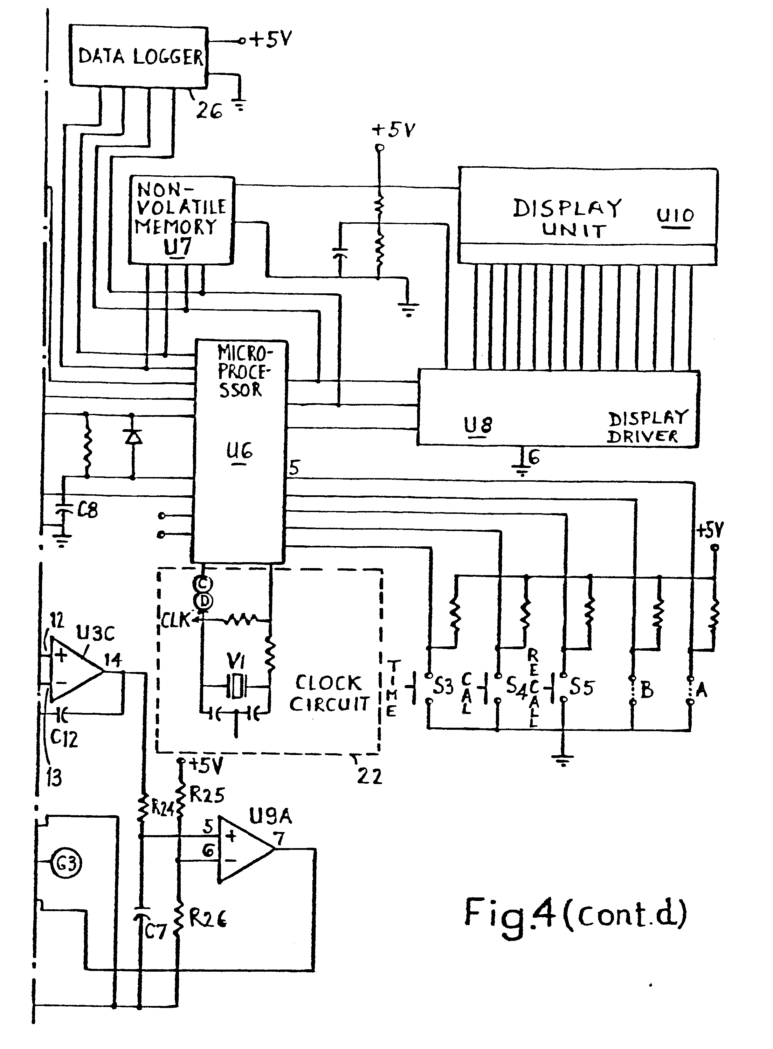

The electronic circuit of the glucometer is illustrated in Figure 4 and basically comprises a central processing unit, conveniently, a microprocessor U6, such as that marketed by National Semiconductor Corporation under the Model No. COPS 444, a crystal-controlled clock circuit 22, a power supply and battery-run down detector circuit 23, LED drive and reflectance sensor circuits 24, A/D circuits 25, a visual display unit U10 and associated display driver circuit U8, a non-volatile memory U7 for calibration storage, a battery-backed, plug-in data logger 26, and an alarm circuit 27, all of which circuit elements are coupled to and controlled by the microprocessor U6.

The power supply circuit comprises a battery B, for example, a 9-volt battery, two transistors Q4,Q5, current limiting resistors R1,R2, a diode D1, a voltage regulator 28, a capacitor C2 connected across the battery and serving as a power supply filter, and manual 'on' and 'off' switches or keys S1,S2. The transistor Q4 serves to allow the microprocessor U6 to switch the power on and off in response to actuation of the keys S1 and S2, whilst Q5 serves as a buffer between the microprocessor and the switching transistor Q4. The voltage regulator 28 is a 5-volt regulator used to maintain the glucometer operating voltage within acceptable limits for the circuits. In this case, the regulator maintains a relative constant 5-volt power supply at its output.

Amplifier U9B is connected as a battery run-down detector and in conjunction with resistors R3,R4,R5 and R6 constantly monitors the input to the voltage regulator 28. Capacitor C1 serves as a filter. When the voltage input to the regulator 28 falls below 6 volts, the output of the amplifier U9B goes high, indicating to the microprocessor U6 that the battery B is weak. Consequently, the microprocessor stops further processing and the system is shut down. A battery warning indication may be displayed on the display unit U10 for a predetermined period, for example, 15 seconds, before the system is shut down.

The drive circuit for the LED Q1 comprises an amplifier U3B which serves as a comparator and controls switching of a transistor Q6 connected in series with a current limiting resistor R20, the LED Q1 and an enabling transistor Q7, between the 5-volt power supply and ground. The transistor Q7 is controlled by the microprocessor U6, via a terminal D2 and an MOS transistor U4C. The latter is connected to the base of transistor Q7, via a current limiting resistor R18, and between the power supply and ground, via a current limiting resistor R19. Capacitor C13 serves as an LED drive filter.

A reference voltage is applied to the input terminal or pin 3 of the comparator amplifier U3B whilst a switching control signal derived from the reference sensor Q2 is applied to the other input pin 2. The reference voltage is supplied by a voltage divider consisting of resistors R9 and R10 connected between the power supply and ground and having the junction between the resistors connected to the pin 3 of amplifier U3B. This reference voltage is also applied to the input pin 5 of a reference amplifier U3A

0182647

-12-

connected as a voltage follower. The pin 5 and the output pin 7 of this amplifier are at the same approximate voltage. The resistor R21 connected to tne output of the reference amplifier U3A serves only as a load resistor. The voltage signal at the output pin 7 of the reference amplifier serves as a voltage reference for the A/D converter circuitry as will hereinafter be more fully described.

The cathode of the reference photodiode sensor Q2 is connected to one input pin 2 of a reference sensor amplifier U2 having its other input pin 3 connected directly to ground. The output pin 6 of this amplifier is connected to a voltage divider network comprising resistors R13,R14,R15 and R16 which serves for calibration purposes. The control signal for the comparator amplifier U3B is obtained from an adjustable tap on the resistor R14, and resistor R13 and R14 together adjust the fraction of the voltage output at the pin 6 of amplifier U2 which is applied to the input pin 2 of amplifier U3B. Capacitor C12 serves as a filter for the control signal whilst capacitor C14 serves a filter for the amplifier U2 output. Resistor R12 and capacitor C4 connected in parallel across the amplifier serve to integrate the amplifier output and reduce noise.

The cathode of the reflectance photodiode sensor Q3 is connected to one input pin 2 of a reflectance amplifier U1 having its other input pin 3 connected directly to ground. Resistor R8 is a load resistor connected to the output pin 6 of the reflectance sensor amplifier and resistor R7 and capacitor C3 connected in parallel across the amplifier from an integrating circuit which integrates the amplifier output and reduces noise. The pin 6 of the reflectance sensor amplifier is connected to one input pin 10 of a chamber difference amplifier U3D having its other input pin 9 connected via an amplifier gain resistor R17 to an adjustable tap on the resistor R16 of the voltage divider network connected to the output of the reference sensor amplifier U2. The resistor R11 is an amplifier gain resistor. The amplifier U3D is a fixed gain amplifier which amplifies the output of the reflectance sensor amplifier U1 by two times minus the voltage appearing at the adjustable tap of the resistor R16. The output of the chamber difference amplifier U3D is an analog signal representing the output of the reflectance sensor Q3 and is fed to the A/D circuitry for conversion into a digital signal representing the reflectance sensor output, as will hereinafter be more fully described.

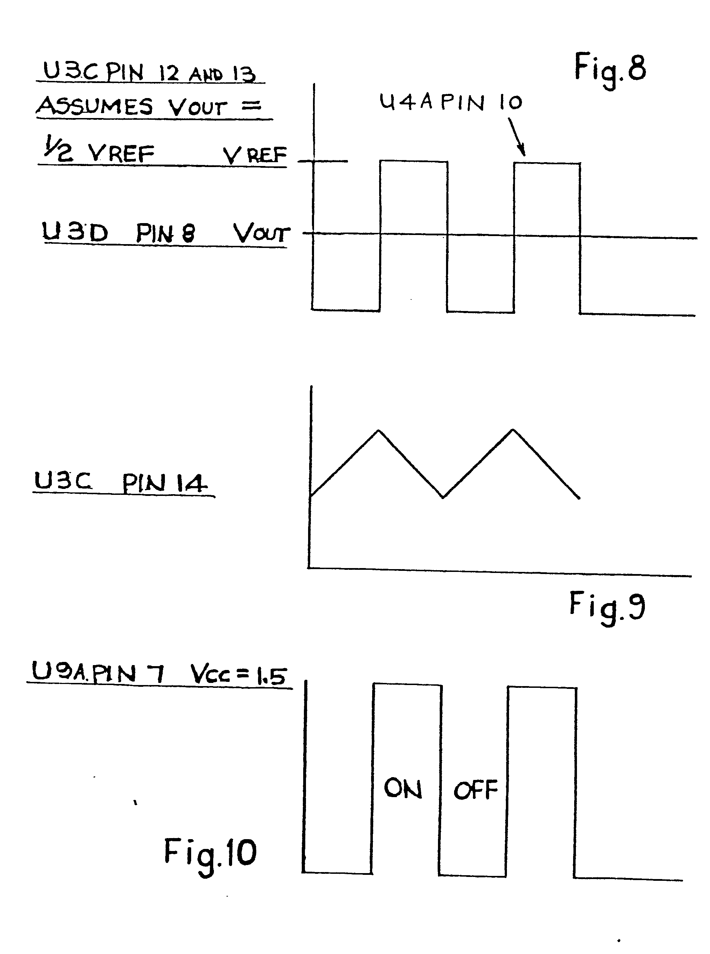

The LED drive circuitry operates as follows. The reference voltage, for example, 1.146 volts, produced by the voltage divider R9,R10 is applied to the pin 3 of the comparator amplifier U3B which compares it with the fraction of the output voltage of the reference sensor amplifier U2 applied to the pin 2 of the comparator amplifier. If the voltage appearing at the pin 2 of amplifier U3B is less than the voltage at pin 3, the output voltage at pin 1 of U3B goes high and the transistor Q6 is switched on, thereby causing more current to flow through the LED Q1. The increased output of Q1 causes reference sensor Q2 to increase its voltage output, thereby causing the output of amplifier U2 to increase. When the voltage at pin 6 of the amplifier U2 is sufficient to cause the voltage at the pin 2 of the amplifier U3B to be larger than that at its pin 3, the output of the amplifier U3B goes low, turning off the LED Q1. The voltage at output pin 6 of the amplifier U2 then begins to decay because no light is incident on the reference sensor Q2 and eventually decreases below a value sufficient to keep the potential at pin 2 of amplifier U3B above that of the pin 3, whereupon the transistor Q6 is turned on and the process is repeated (see Figs. 5 and 6). Consequently, the LED Q1 is continuously pulsed on and off (see Fig. 7) with a frequency and pulse width sufficient to maintain the mean voltage at the pin 2 of the amplifier U3B at the reference voltage supplied by the voltage divider R9,R10 irrespective of temperature, LED efficiency or the sensitivity of reference photodiode Q2.

The resistor R14 is used to adjust the fraction of the voltage output at pin 6 of the amplifier U2 to be applied to the pin 2 of the comparator amplifier U3B. The higher the fraction, the less light is emitted by the led Q1 to enable control and the less light is incident on the reflectance sensor Q3 for a given reflector. Normally, a 90% reflector is inserted into the test chamber and the resistor R14 is adjusted such that LED Q1 emits sufficient light to cause the output of the reflectance sensor amplifier U1 to give a voltage corresponding to a 90% reflectance when 100% is equal to 1.146 volts, the reference voltage. The resistor R16 is used to adjust the dark reference. For this purpose, a 4.5% standard reflectance is inserted into the test chamber and the resistor R16 is adjusted until the correct voltage appears at the output pin 8 of the chamber difference amplifier U3D. All optical chambers have stray reflectances, including those which are off the protective lens 13 in front of the test strip. These are usually greater than that received from a 4.5% reflector. Consequently, when calibrating the low or dark reflectance reference, the offset reflectances and the effects of the amplifier's input offset voltages must be subtracted. The fixed gain amplifier U3D is used for this purpose.

Hence, the resistor R16 is used to subtract offset errors from the amplifiers and stray reflectances to enable an accurate low reflectance reading whilst the resistor R14 is used to calibrate the high reflectance reading. Since the whole system is a function of the reference voltage applied to the input pin 5 of the reference amplifier U3A and since all calibration voltages are derived from the output of the reference amplifier whose output is a function of this same reference voltage, the system is truly ratio metric and independent of battery voltage and absolute readings, as well as environmental conditions. The system is self-regulatory, requiring very short bursts of light current to enable a reflectance reading and thereby prolonging battery life.

The A/D converter circuitry 25 basically comprises a D-type flip-flop U5, an integrating amplifier U3C and a comparator amplifier U9A. The output of the reference amplifer U3A serves as a reference for both the analog system and the converter, thereby enhancing the ratio metric qualities of the overall system, and is connected to one terminal of two MOS transistors U4A,U4B, connected in series between the output pin 7 of U3A and ground and controlled by the D-type flip-flop U5. The capacitor C6 connected between the output pin 7 and ground serves as a reference follower filter. The flip-flop U5 is triggered by signals applied to its input D from the output of the comparator amplifier U9A.

The reflectance signal appearing at the output pin 8 of the difference amplifier U3D is integrated by resistor R22 and capacitor C5 connected between the output pin 8 and ground and is applied to one input pin 12 of the integrator amplifier U3C. The other input pin 13 of this amplifier is connected to the junction of the two transistors U4A,U4B, via a filter resistor R23, and to the output pin 14 of the amplifier via n output filter capacitor C12. The output pin 14 of the integrating amplifier U3C is connected to one input pin 5 of the comparator amplifier U9A by a filter resistor R24 which is also connected to ground by a capacitor C7 and serving as a delay. The other input pin 6 of the amplifier U9A is connected to a reference voltage supplied by voltage divider resistors R25,R26 connected between the power supply and ground.

The A/D converter 25 is of the pulse width modulation type and is controlled by the microprocesor U6 which is fed with a digital signal via the terminal G3 connected to the output pin 2 of the flip-flop U5. When the reflectometer is taking a reading, the reflectance signal appearing at the output pin 8 of the chamber difference amplifier U3D is integrated by the resistor R22 and the capacitor C5 and is applied to the input pin 12 of the integrator amplifier U3C. Assuming that, at time 0, the state of the flip-flop U5 is pin 1 = low and pin 2 = high, then the voltage at the pin 10 of transistor U4A is zero. The voltage appearing at the pin 12 of amplifier U3C is initially zero, regardless of the output voltage on pin 8 of amplifier U3D and charges slowly to the output voltage of amplifier U3D. As the capacitor C5 charges, the voltage applied to pin 12 of amplifier U3C exceeds the potential at pin 13, whereupon the output potential at pin 14 begins slowly to climb. When the voltage at pin 14 exceeds the reference voltage developed by the voltage divider R25,R26, the output pin 7 of the comparator amplifier U9A goes high triggering flip-flop U5 and causing its state to change to pin 1 = high, pin 2 = low, thereby connecting the negative input of amplifier U3C to the circuit reference voltage at pin 7 of amplifier U3A. Amplifier U3C then commences to discharge until the voltage at output pin 14 decays below that at input pin 6 of comparator amplifier U9A, whereupon the flip-flop U5 is reset and the cycle repeats (see Figs. 8, 9 and 10).

The net result of this sequence of operations is the production of a digital signal having a frequency or pulse rate whose mark space ratio is a function of the ratio of the reflectance sensor output signal at the pin 8 of the amplifier U3D to the reference signal at the output pin 7 of the reference amplifier U3A. The microprocessor U6 counts the pulses appearing at the pin 2 of the flip-flop U5 via terminal G3 and develops a binary count according to the following formula:-

$$\text{Counts} = \frac{V \text{ pin } 8}{V \text{ pin } 7} . 4096$$

The microprocessor consequently receives a digital count directly related to the ratio of the reflectance sensor output signal to the reference voltage. On detecting a pulse count, the microprocessor accesses a look-up table permanently stored in its read only memory (ROM) and operates the display driver U8 to display a corresponding glucose level on the visual display unit U10.

The audio alarm 30, which may for example be 2 kHz piezoelectric disc, is excited by the microprocesssor U6 via transistors U4D and Q8. The resistor R27 is a current limiting resistor. The alarm tone is emitted each time a key is depressed, for example , to warn a user when to wipe a test strip 9 and when a reading is complete.

The amplifiers U3A-D may be formed as parts of a single chip component as may also the MOS transistors U4A-D and the amplifiers U9A and B.

Upon depressing the 'on' key S1, the microprocessor U6 is initialised and immediately causes the alarm 30 to issue a short audio tone, for example, for 200 ms, to acknowledge that the 'on' key has been depressed. Initially, the microprocessor makes the following checks:-

1. Checks battery B voltage

2. Checks if calibration data is stored in the memory U7

3. Checks if the LED Q1 is functioning.

After these initial checks, the microprocessor checks to determine whether normal or factory calibration has been selected. Factory calibration selection is not available to the end user. If factory calibration is selected (by shorting the pin 5 on the microprocessor U6 to ground) the microprocessor initially checks all segments of the display U10 and external memory locations. The memory U7 is erased when this check is completed thus destroying all previous calibration data as well as stored glucose values. It then goes into a continuous reflectance test mode, whereby the display U10 constantly shows the A/D count of whatever it sees in the optical chamber. The system must be turned off to exit this mode. This mode is used to calibrate the glucometer and for long term accuracy tests.

If normal mode is selected, the microprocessor U6 checks to determine if the free reflectance (no test strip 9 in the chamber) is 37 +/- 1%. If it is below 36%, but greater than 33%, the microprocessor indicates "CLEN" on the display U10. If it is below 33%, the microprocessor indicates "ER1" on the display. It then shuts down, indicating that the chamber is too dirty to get accurate measurements.

Assuming the glucometer passes the chamber clean test, the microprocessor U6 then checks to determine if calibration data is stored in the memory U7. If not, the processor displays "CAL" for one second and then indicates that a time sequence is next. This is the normal test sequence. If should be noted that the microprocessor has stored in its ROM the characteristic curve for glucose concentration versus percent reflectance. The calibration routine is required only to modify the curve to account for ageing and lot-to-lot variance. In most cases calibration is not required. The glucometer actually does not demand it and will continue to test even if modifying calibration data is not stored in the memory U7. If calibration data is stored in that memory, the microprocessor does not display "CAL" but goes directly to "SEC" (time indication) and awaits the depression of the time key S3. It then scans only the on/off keys S1,S2 and the time key S3. Upon depressing the time key, when the user has deposited blood on a test strip 9, the system immediately acknowledges the kep depression by issuing a short tone on the audio alarm 30 and shows the time count on the display U10. At 58 seconds the system issues a short "get ready to wipe" audio tone; at 59 seconds another short "get ready to wipe" audio tone is issued. At 60 seconds a longer 500 ms audio tone is issued, indicating the strip should be wiped. At 89 seconds an audio tone is issued, indicating that it is too late to insert the strip 9 if this has not already been done. At 90 seconds the LED Q1 is switched on by the microprocessor and the A/D converter is taken through one A/D conversion cycle to charge all A/D capacitors. At 91 seconds another A/D conversion is detected. On this occasion, the microprocessor U6 retains the count and converts it to a ratio/count 4096. The microprocessor then goes to the look-up tables to retrieve the corresponding glucose concentration value and checks the memory U7 to determine if the concentration should be modified. If there is no external calibration data written in the memory U7, the microprocessor causes the audible alarm 30 to issue a short tone and displays the concentration on the visual display U10. At the same time, the reading obtained is written into the memory U7 and into the data logger 26. The data output to the data logger 26 is in serial fashion with a "1" being 10 clock pulses long and "0" being 5 clock pulses long. The microprocessor also supplies the data logger with information as to whether received data is in mg/dl or mmol/litre.

The memory U7 is used to store the calibration data and a sequence of fifteen glucose readings. A reading is written into the memory if the calibration key S4 is depressed and the stored readings are accessible to the user simply by depressing the recall key S5. With each depression of the key S5, the microprocessor displays on U10 the reading stored in the memory U7 in a last in-first out sequence. The data is automatically stored in the memory U7 each time a reading is taken by the glucometer.

The glucometer circuit incorporates an automatic shut-down feature. If no key has been actuated within a period of two minutes from actuation of the 'on' key S1, the microprocessor automatically turns off the power to enhance battery life. Automatic shut-down also occurs if a bad light source Q1 is detected or if the optical chamber is detected to be dirty.

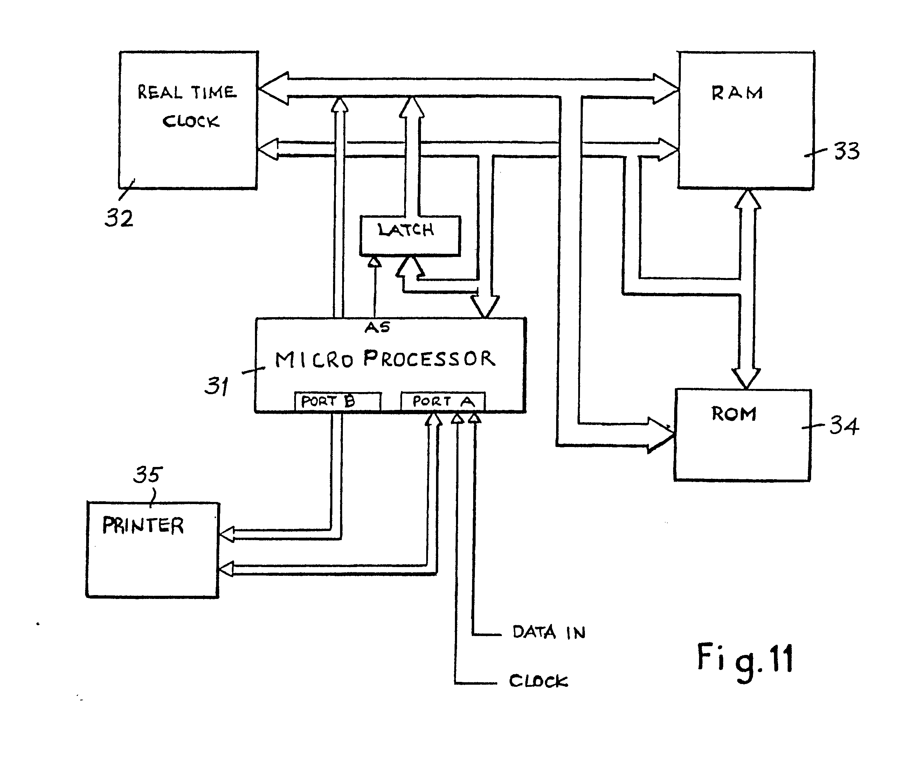

As illustrated in Fig. 11, the data logger 26 comprises a microprocessor 31, for example, an 8-bit microprocessor such as an MC68LO5, a real time clock 32, a RAM 33 and a ROM 34. After the real time clock 32 has been set at a doctors office, the logger module is plugged into the glucometer. Upon insertion, the audio alarm 30 is actuated to issue a short tone to acknowledge successful insertion and "STO" (indicating storage) is briefly displayed on the visual display U10. Thereafter, whenever a reading is taken the glucometer microprocessor U6 issues a flag to the logger microprocessor 31 to accept input data. Data is supplied serially, in the format mentioned above, in straight binary followed by two parity bits. At this time, the glucometer displays above the glucose reading "STO" to signify that data is being stored. Upon successful transfer of glucose data, the logger microprocessor 31 reads the real time clock 32 and stores all data in the logger RAM 33. The latter and clock power are supplied from a self-contained battery. All other elements receive power from the glucometer power supply circuit 23. The ROM 34 stores the main logger sequence and logic programme and serves no function in storage of glucose/ time data. If the module is now unplugged from the glucometer and is inserted into a printer 35, the microprocessor 31 begins to output data in ASQ1 II in the following format, last reading first:-

| Date | Time | Reading |
|------|------|---------|
| 4/21 | 3:03 p.m. | 120 |
| 4/20 | 4:05 p.m. | * 250 |
| 4/19 | 4:00 p.m. | # 60 |

The "*" and "#" are used to highlight high and low readings respectively.

The logger microprocessor 31 only reads storage cells in the RAM 33 containing data and prints "END" when it reaches an empty cell so as not to print all unused spaces in the RAM. Since the output format is an industry standard and module can be adapted to virtually all 20 or more column printers.

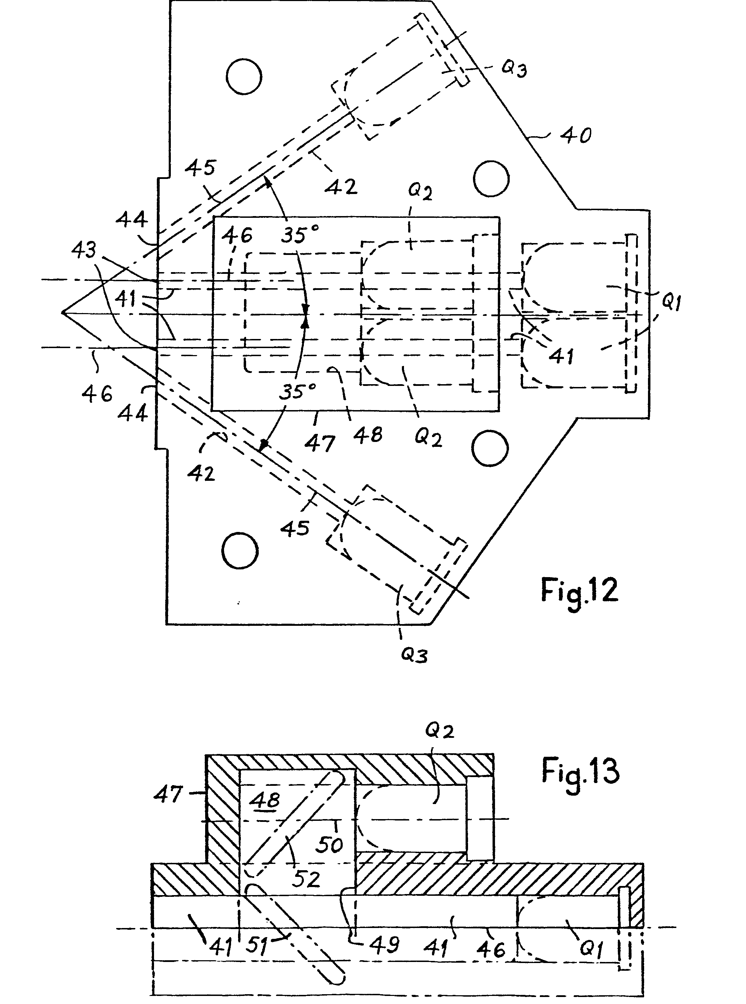

Figures 12 and 13 illustrate another embodiment of optical chamber for a glucometer, which chamber comprises duplicate sets of LEDs Q1, photodiode reference sensors Q2 and photodiode reflectance sensors Q3. Similarly to the first embodiment, it comprises a two-part body 40. The latter has two sets of passageways 41,42 constituting optical paths or guides, the first guide 41 of each set being open at one end 43 and having the LED Q1 at its opposite end, and the second guide 42 having an open end 44 adjacent the open end 43 of the first guide and having the reflectance sensor Q3 at its opposite end. Light from each LED Q1 is projected along the associated first guide 41 so as to impinge on a test strip (not shown) supported in a suitable holder (not shown) adjacent the open ends 43 of the guides 41. Each second guide 42 has its optical axis 45 inclined to the optical axis 46 of the associated first guide and intersects the axis of the first guide at a point in front of the open ends of the guides and adjacent the position at which the test strip is supported. The optical axis 45 of each second guide is inclined at an angle of approximately 35° to the axis 46 of the associated first guide.

The reference sensors Q2 are mounted in a housing 47 disposed above the first optical guides 41 intermediate the ends thereof. The housing comprises a cavity 48 communicating with a cavity 49 formed along the first optical guides 41. The reference sensors Q2 are mounted along optical axes 50 parallel to the optical axes 46 of the first guides and a small fraction of the light emitted by each LED Q1 is reflected onto the associated reference sensor Q2 by a beam splitting lens 51 mounted in an inclined position across the cavity 49 and, hence, relative to the first optical axes 46, and a reflector 52 mounted in an inclined position in the cavity 48.

Each set of LED and photodiodes Q1,Q2,Q3 may be connected in an LED drive and reflectance sensor circuit 24 as described above, utilising a multiplexer to interconnect this circuitry with the remainder of the glucometer system so as to produce reflectance readings from each reflectance sensor Q3.

Whilst particular embodiments have been described, it will be understood that modifications can be made without departing from the scope of the invention as defined by the appended claims. For example, the electronic system may be arranged automatically to store glucose readings in the memory U7 (15 readings) instead of as at present, requiring the user to depress a store key S4 to enable storage. The "CLEN" indicator and initial reflectance check upon power-on may be eliminated. This function, as presently programmed, requires the pressure plate pressing up against the back of strip 9 to have a 34% reflectance (equivalent to 106 mg/dl of glucose). If no strip is in the strip holder unit, the latter could read 106 mg/dl giving user a false reading. This feature may be eliminated by making the pressure plate reflectance less than 20% thus giving a high reading if no strip 9 is in the holder. The "ER1" function may be reduced to a simple lamp check, as opposed to checking if the optical chamber is dirty. It is difficult to access a dirty chamber by checking reflectance from the pressure plate. "ER1" may then be used to indicate a serious circuit or lamp malfunction. The "CAL" indicator may be eliminated if the unit does not have modifying CAL data. The system will still be capable of being calibrated by the user. However, it is believed this will be unnecessary and thus will keep the function if it is ever needed. This will depend upon ageing characteristics of the strip.

CLAIMS

1. An optical chamber for a reflectometer, comprising at least one light source (Q1) arranged to illuminate a test specimen (9) via a first optical path (4,41) and at least one reflectance photosensor (Q3) for detecting light reflected from said test specimen, characterised in that the reflectance photosensor (Q3) is disposed along a second optical path (5,42) having its optical axis (12,45) inclined to the optical axis (11,46) of the first optical path (4,41) and intersecting said first optical axis (11,46) at or adjacent the test specimen (9), whereby the photosensor (Q3) detects random reflections from the test specimen.

2. An optical chamber according to claim 1, characterised in that the optical axis (12,45) of the second optical path is inclined to the optical axis (11,46) of the first optical path at an angle of at least 20° and, preferably at an angle of approximately 35°.

3. An optical chamber according to claim 1 or 2, characterised in · that the test specimen (9) is in the form of a test strip, and means is provided for locating said test strip along the first optical path (4) with the plane of said strip disposed substantially perpendicular to the first optical axis (11), and further characterised in that a protective lens device (13) is disposed across the first and second optical paths (4,5) adjacent the position at which the test strip (9) is located.

4. An optical chamber according to claim 1, 2 or 3, characterised by at least one reference photosensor (Q2) disposed along a third optical path (6,48), for example, having its optical axis (14) substantially perpendicular to the optical axis (11) of the first optical path (4), and beam splitter means (15,51) arranged to reflect a minor fraction of the light emitted by said at least one light source (Q1), along the third optical path (6,48) and onto the reference sensor (Q2) whilst transmitting a major fraction of the light so as to impinge on the test specimen (9).

5. An optical chamber according to claim 4, characterised by a drive circuit for the or each light source (Q1) which is responsive to a control signal derived from the associated reference sensor (Q2) and which operates the light source to maintain the control signal at a generally constant level.

6. An optical chamber according to claim 4 or 5, characterised in that the or each light source (Q1) is a light emitting diode and the sensors (Q2,Q3) are photodiodes.

7. A reflectometer including an optical chamber having at least one light source (Q1) for illuminating a test specimen (9), and at least one reflectance photosensor (Q3) responsive to light reflected from the test specimen to produce a reflectance signal corresponding to the reflectance of the specimen, characterised by at least one reference photosensor (Q2) responsive to a fraction of the light emitted by said at least one light source (Q1), and a drive circuit (24) for the or each light source which is responsive to a control signal derived from the associated reference sensor (Q2) and which operates the light source (Q1) so as to maintain said control signal generally at a constant level.

8. A reflectometer according to claim 7, characterised in that the drive circuit comprises comparator means (U3B) which compares the control signal derived from the reference sensor (Q2) with a reference signal, and a switching device (Q6) for controlling the light source (Q₁) and which is responsive to the comparator means, whereby to actuate the light source so as to maintain the control signal generally at a constant level, for example, the level of the reference signal.

9. A reflectometer according to claim 7 or 8, characterised by a reference sensor amplifier (U2) for the reference photosensor (Q2), a first integrating circuit (R12,C14) for integrating the output of said reference sensor amplifier, and a first voltage divider (R13-R16) connected to the output of said amplifier, said control signal for the drive circuit being derived from said first voltage divider.

10. A reflectometer according to claim 7, 8 or 9, characterised by means (25) for producing a digital reflectance signal corresponding to the reflectance sensor output.

11. A reflectometer according to claim 10, characterised by a reflectance sensor amplifier (U1) for the reflectance sensor (Q3), a second integrating circuit (R7,C13) for integrating the output of said reflectance sensor amplifier, and means (25) for processing the output signal of said reflectance sensor amplifier to produce a digital reflectance signal.

12. A reflectometer according to claim 10 or 11, characterised in that the means for producing a digital reflectance signal includes an analog-to-digital converter (25) which compares an analog reflectance signal derived from the reflectance sensor output with a reference signal and produces a pulse train having a pulse rate corresponding to the analog reflectance signal.

13. A reflectometer according to claim 12, characterised by a fixed gain amplifier (U3D) having inputs connected to the output of the reflectance sensor amplifier (U1) and the first voltage divider (R13-R16), respectively, said analog-to-digital converter (25) being connected to the output of the fixed gain amplifier, and the connection of the drive circuit to the first voltage divider being adjustable so as to determine the light standard reflectance and the connection of the fixed gain amplifier (U3D) to the first voltage divider being adjustable to determine the dark standard reference.

14. A reflectometer according to claim 12 or 13, characterised by a second voltage divider (R9,R10) for producing the reference signal, and a reference amplifier (U3A), said second voltage divider being connected to the drive circuit and the reference amplifier, and the output of said reference amplifier (U3A) being connected to the analog-to-digital converter (25).

15. A reflectometer according to claim 14, wherein the analog-to-digital converter (25) compares the analog reflectance signal and the reference signal derived from the reference amplifier (U3A) and produces a digital reflectance signal in the form of a pulse train having a pulse rate corresponding to the analog reflectance signal.

16. A reflectometer according to any preceding claim 10 to 15, characterised by central processing means (U6) for processing the digital reflectance signal and producing a measurement of reflectance.

Fig.1

Fig.2

Fig.3

U3B
PINS 3 AND 2
VREF.

PIN 2

Fig.5

U3B PIN I

Vcc - 1.5 →

Fig.6

Q1 ANODE

1·2 VOLTS

Fig.7

0182647

Fig.4

Fig.4 (cont.d)

0182647

U3C PIN 12 AND 13
ASSUMES VOUT =
½ VREF          VREF

Fig.8

U4A PIN 10

U3D   PIN 8   VOUT

U3C   PIN 14

Fig.9

U9A PIN 7   VCC = 1.5

ON | OFF

Fig.10

Fig.11

0182647

Fig.12

Fig.13